# EUROPÄISCHE PATENTANMELDUNG

(11) **EP 3 944 917 A1**
(43) Veröffentlichungstag der Anmeldung: **02.02.2022**
(21) Anmeldenummer: 20188335.2
(22) Anmeldetag: 29.07.2020
(51) Int. Cl.: B23B 49/00

(54) **GERÄTESYSTEM UND VERFAHREN ZUR ERMITTLUNG EINER TIEFE EINER BOHRUNG, DIE MIT DEM GERÄTESYSTEM ERZEUGT WIRD**

(71) Anmelder: Hilti Aktiengesellschaft, 9494 Schaan (LI)
(72) Erfinder: Rieger, Hans-Joerg, 6712 Thueringen (AT)
(74) Vertreter: Hilti Aktiengesellschaft Corporate Intellectual Property

(57) **Zusammenfassung**

Die vorliegende Erfindung betrifft ein Gerätesystem, das einen Geräteständer, ein am Geräteständer verschiebbar angeordnetes Bohrgerät zur Durchführung einer Bohrung und eine Vorschubvorrichtung zum Verschieben des Kernbohrgerätes entlang des Geräteständers umfasst. Die Vorschubeinrichtung umfasst eine beispielsweise als Handrad oder als Hebel ausgebildete manuelle Vorschubeinrichtung und das Gerätesystem umfasst eine Steuereinrichtung zur Auswertung von Messwerten. Die Vorschubeinrichtung oder die manuelle Vorschubeinrichtung umfassen einen Sensor zur Ermittlung von Messwerten, wobei die Messwerte zur Auswertung verwendet und an die Steuereinrichtung übermittelt werden und wobei ein Startpunkt und/oder ei n Endpunkt der Bohrung von der Steuereinrichtung durch eine sprunghafte Veränderung von Bohrparametern erkannt wird. In einem zweiten Aspekt betrifft die Erfindung ein Verfahren zur Ermittlung einer Tiefe einer Bohrung, wobei die Bohrung mit dem vorgeschlagenen Gerätesystem erzeugt wird.

## Beschreibung

Die vorliegende Erfindung betrifft ein Gerätesystem, das einen Geräteständer, ein am Geräteständer verschiebbar angeordnetes Bohrgerät zur Durchführung einer Bohrung und eine Vorschubvorrichtung zum Verschieben des Bohrgerätes entlang des Geräteständers umfasst. Die Vorschubeinrichtung umfasst eine manuelle Vorschubeinrichtung und das Gerätesystem umfasst eine Steuereinrichtung zur Auswertung von Messwerten. Die Vorschubeinrichtung oder die manuelle Vorschubeinrichtung umfasst zumindest einen Sensor zur Ermittlung von Messwerten, wobei die Messwerte zur Auswertung verwendet und an die Steuereinrichtung übermittelt werden und wobei ein Startpunkt und/oder ein Endpunkt der Bohrung von der Steuereinrichtung durch eine sprunghafte Veränderung von Bohrparametern erkannt wird. In einem zweiten Aspekt betrifft die Erfindung ein Verfahren zur Ermittlung einer Tiefe einer Bohrung, wobei die Bohrung mit dem vorgeschlagenen Gerätesystem erzeugt wird.

### Hintergrund der Erfindung:

Beispielsweise aus DE 10 2004 033 361 A1 ist ein Gerätesystem bestehend aus einem Geräteständer, einem am Geräteständer verschiebbar angeordneten Bohrgerät und einer Vorschubvorrichtung zum Verschieben des Bohrgerätes entlang des Geräteständers bekannt. Die Vorschubvorrichtung kann beispielsweise als manuelle Vorschubvorrichtung ausgebildet sein.

Anstatt mit einer manuellen Vorschubvorrichtung kann das Gerätesystem auch mit einer motorisch ausgebildeten, sogenannten automatischen Vorschubvorrichtung ausgestattet sein. Solche Vorrichtungen sind als *Autofeed*-Vorrichtungen oder Cut Assist-Vorrichtungen bekannt. Diese automatischen Vorschubvorrichtungen können in der Lage sein, die Tiefe einer Bohrung, die mit dem Gerätesystem erzeugt wird, zu bestimmen. Die Information kann für den Bediener des Bohrgeräts interessant sein und ihm das Arbeiten mit dem Gerätesystem erleichtern. Die Bohrtiefe kann beispielsweise dazu verwendet werden, eine vorgegebene Bohrtiefe einzuhalten. Die Ermittlung der gebohrten Tiefe eines Bohrlochs kann ferner für Abrechnungszwecke informationstechnologisch weiterverarbeitet oder als Grundlage für die Abrechnung von Bohrdienstleistungen verwendet werden.

Bei ständergeführten Bohrgeräten werden allerdings häufig manuelle Vorschubeinrichtungen eingesetzt, bei denen der Vorschub rein mechanisch über ein Handrad erzeugt wird. Für solche Gerätesysteme mit manuellen Vorschubeinrichtungen ist bisher im Stand der Technik keine befriedigende Lösung bekannt, um die Tiefe einer Bohrung, die mit dem Gerätesystem erzeugt wird, zu bestimmen.

Aufgabe der vorliegenden Erfindung ist es, die vorstehend beschriebenen Nachteile und Mängel des Standes der Technik zu überwinden und ein Gerätesystem und ein Verfahren zur Ermittlung einer Tiefe einer Bohrung für ständergeführte Bohrgeräte mit manueller Vorschubeinrichtung, beispielsweise einem Handrad, anzugeben.

Die Aufgabe wird durch den Gegenstand der unabhängigen Ansprüche gelöst. Vorteilhafte Ausführungsformen zu dem Gegenstand der unabhängigen Ansprüche finden sich in den abhängigen Unteransprüchen.

### Beschreibung der Erfindung:

Die Aufgabe wird gelöst durch ein Gerätesystem umfassend einen Geräteständer, ein am Geräteständer verschiebbar angeordnetes Bohrgerät zur Durchführung einer Bohrung und eine Vorschubvorrichtung zum Verschieben des Bohrgerätes entlang des Geräteständers, wobei die Vorschubeinrichtung eine manuelle Vorschubeinrichtung umfasst und wobei das Gerätesystem eine Steuereinrichtung zur Auswertung von Messwerten umfasst. Das Gerätesystem ist dadurch gekennzeichnet, dass die Vorschubeinrichtung oder die manuelle Vorschubeinrichtung mindestens einen Sensor zur Ermittlung von Messwerten umfasst, wobei die Messwerte zur Auswertung verwendbar und an die Steuereinrichtung übermittelbar sind, wobei ein Startpunkt und/oder Endpunkt der Bohrung von der Steuereinrichtung durch eine sprunghafte Veränderung von Bohrparametern erkannt wird. Mit der vorgeschlagenen Erfindung kann vorteilhafterweise eine Möglichkeit bereitgestellt werden, für ständergeführte Bohrgeräte mit manueller Vorschubeinrichtung die Tiefe eines erzeugten Bohrlochs zu bestimmen.

Es ist im Sinne der Erfindung bevorzugt, dass die manuelle Vorschubeinrichtung als Handrad ausgebildet ist. Alternativ kann die manuelle Vorschubeinrichtung von einem Hebel gebildet werden. Vorzugsweise wird das Handrad gedreht bzw. der Hebel gedreht oder betätigt, um einen Vorschub des Bohrgeräts zu bewirken.

Vorzugsweise ist das Gerätesystem dazu eingerichtet, Bohrlöcher zu erzeugen und Bohrvorgänge durchzuführen. Das vorgeschlagene Gerätesystem kann insofern im Sinne der Erfindung als Bohrsystem bezeichnet werden. Der Geräteständer, das Bohrgerät, die Vorschubeinrichtung, die manuelle Vorschubeinrichtung, sowie die Steuereinrichtung können im Sinne der Erfindung bevorzugt als Komponenten oder als Bestandteile des Gerätesystems bezeichnet werden.

Der Geräteständer umfasst vorzugsweise eine Führungsschiene und einen Führungsschlitten zur Aufnahme des Bohrgeräts, wobei das Bohrgerät über den Führungsschlitten an der Führungsschiene angeordnet ist und mittels der Vorschubvorrichtung entlang der Führungsschiene verschiebbar ist. Die Vorschubvorrichtung umfasst insbesondere eine manuelle Vorschubeinrichtung, die als Handrad oder als Hebel ausgebildet sein kann.

Das Bohrgerät kann mit der manuellen Vorschubeinrichtung entlang der Führungsschiene verfahren werden. Wenn die manuelle Vorschubeinrichtung als Handrad ausgebildet ist, kann es mehrere Griffteile umfassen, die schwenkbar angeordnet sind und die drehfest mit dem Führungsschlitten des Geräteständers gekoppelt sind. Vorzugsweise kann die manuelle Vorschubeinrichtung am Geräteständer montiert vorliegen. Durch Verkippen mindestens eines Griffteils kann das Handrad bewegt und eine Vorschubbewegung des Bohrgeräts erzeugt werden. Dazu wird in ein durch die manuelle Vorschubeinrichtung erzeugter Vorschub auf das Bohrgerät des Gerätesystems übertragen.

Es ist im Kontext der Erfindung vorgesehen, dass die Vorschubeinrichtung oder die manuelle Vorschubeinrichtung einen Sensor zur Ermittlung von Messwerten umfasst. Bei den Messwerten kann es sich beispielsweise um Beschleunigungswerte handeln, wenn der entsprechende Sensor ein Beschleunigungssensor ist. Vorzugweise beschreibt der Begriff "Messwert" im Sinne der Erfindung Werte oder Parameter, die die Position eines Objekts angeben oder beschreiben. Mit solchen Positionswerten können beispielsweise Winkel, insbesondere Drehwinkel, oder Umdrehungsangaben, zum Beispiel die Anzahl von Umdrehungen, gemeint sein. Es ist im Sinne der Erfindung bevorzugt, dass der mindestens eine Sensor an einem drehbaren Teil oder auf ein drehbares Teil schauend angebracht ist. Dabei kann es sich beispielsweise um die Achse der als Handrad ausgebildeten manuellen Vorschubeinrichtung handeln. Dies ist insbesondere dann von Vorteil, wenn der Sensor ein Gyrosensor ist.

Mit anderen Worten kann der mindestens eine Sensor an der Vorschubeinrichtung oder an dem Handrad oder dem Hebel des vorgeschlagenen Bohrsystems angeordnet vorliegen. Es können auch zwei oder mehrere Sensoren innerhalb des Gerätesystems vorgesehen sein, wobei es sich beispielsweise bei den Sensoren zur Aufnahme der Messwerte und/oder der Drehwinkel insbesondere um Beschleunigungssensoren, Gyrosensoren und/oder um Magnetometer handeln kann. In diesem Ausführungsbeispiel der Erfindung können die Drehwinkel zur Auswertung an die Steuereinrichtung des vorgeschlagenen Bohrsystems übermittelt werden, wobei Startpunkte und vorzugsweise auch Endpunkte der Bohrung von der Steuereinrichtung durch eine sprunghafte Veränderung von mindestens einem weiteren Bohrparameter erkannt werden. Bohrparameter sind beispielsweise physikalischen Größen oder Kenngrößen, die den Fortschritt des Bohrvorgangs oder Vorgänge innerhalb der Komponenten des vorgeschlagenen Bohrsystems beschreiben. Geeignete Bohrparameter sind insbesondere elektrische Größen, wie Spannung, Strom und/oder Leistung, ohne darauf beschränkt zu sein.

Es ist im Sinne der Erfindung ganz besonders bevorzugt, dass der Beginn des Bohrprozesses durch einen sprunghaften Anstieg einer Leistungsaufnahme und am Ende der Bohrung durch einen sprunghaften Abfall der Leistungsaufnahme des Motors des Bohrgeräts erkannt wird. In dieser bevorzugten Ausgestaltung der Erfindung stellt die Leistung bzw. die Leistungsaufnahme des Bohrgerätmotors den Bohrparameter dar, der zu Bestimmung des Start- oder Endpunkts des Bohrvorgangs verwendet wird. Vorzugsweise steigt die Leistungsaufnahme des Motors des Kernbohrgeräts stark an, wenn die Bohrkrone des Bohrgeräts Kontakt zu dem zu bearbeitenden Untergrund bekommt und der Bohrvorgang beginnt.

Es ist im Sinne der Erfindung bevorzugt, dass eine Tiefe der Bohrung unter Verwendung eines Übersetzungsverhältnisses und einer Anzahl von Umdrehungen der manuellen Vorschubeinrichtung bestimmbar ist, wobei die Anzahl von Umdrehungen der manuellen Vorschubeinrichtung auf Grundlage der Messwerte, die mit dem mindestens einen Sensor ermittelt werden, ermittelbar ist. Die Auswertungen und Berechnungen erfolgen vorzugsweise in der Steuereinrichtung bzw. sie werden in der Steuereinrichtung durchgeführt. Der Begriff "Übersetzungsverhältnis" ist im Sinne der Erfindung vorzugsweise als Anzahl der Drehungen des Handrads oder des Hebels zu verstehen, die durchgeführt werden, um mit der manuellen Vorschubeinrichtung einen gewünschten Vorschub zu erreichen.

Wenn die manuelle Vorschubeinrichtung als Handrad ausgebildet ist, ist es im Sinne der Erfindung bevorzugt, dass die Anzahl der Umdrehungen des Handrades verwendet wird, um gemeinsam bzw. in Kombination mit dem Übersetzungsverhältnis zur Bestimmung der Bohrlochtiefe beizutragen. Dies gilt in analoger Weise für die Betätigung des Hebels, wenn die manuelle Vorschubeinrichtung von einem Hebel gebildet wird.

Es ist im Sinne der Erfindung bevorzugt, dass der Begriff "Bohrung" sowohl für den Prozess des Bohrvorgangs verwendet wird, als auch für das durch die Bohrung erzeugte Bohrloch. Der Begriff "Startpunkt der Bohrung" ist somit vorzugsweise als "Beginn des Bohrvorgangs" zu verstehen, währen der Begriff "Tiefe der Bohrung" die "Tiefe des Bohrlochs" beschreibt. Gemeint ist damit bevorzugt der Längenfortschritt, der bei einem Bohrvorgang erzeugt wird. Wenn sich die Bohrkrone des Bohrgeräts beispielsweise 20 cm in einen Untergrund hineinschneidet, wird vorzugsweise diese Länge von 20 cm als "Tiefe der Bohrung" oder als "Tiefe des Bohrlochs" verstanden. Es ist im Sinne der Erfindung bevorzugt, dass als Startpunkt der Bohrung eine sprunghafte bzw. abrupte Veränderung von Bohrparametern verwendet wird. Der Begriff "Startpunkt der Bohrung" ist insbesondere als Zeitpunkt zu verstehen, d.h. als zeitlicher Startpunkt des Bohrvorgangs.

Der Begriff des "Endpunktes einer Bohrung" kann im Sinne der Erfindung bevorzugt als der Punkt verstanden werden, an dem das Werkzeug des Bohrgeräts den zu bearbeitenden Boden erreicht oder eine zu durchbohrende Wand durchdringt. Der entsprechende Zeitpunkt, an dem der Endpunkt der Bohrung erreicht wird, ist vorzugsweise dadurch gekennzeichnet, dass die aufgenommene Leistung am Bohrgerät schlagartig abnimmt.

Es ist im Sinne der Erfindung bevorzugt, dass das Bohrgerät eine Bohrkrone als Werkzeug, sowie einen Motor zum Antrieb der Bohrkrone umfasst. Vorzugsweise kann ein Startpunkt der Bohrung von der Steuereinrichtung des Gerätesystems durch einen sprunghaften Anstieg einer Leistungsaufnahme des Motors erkannt werden. Der sprunghafte Anstieg der Leistungsaufnahme des Motors stellt dabei bevorzugt eine sprunghafte Veränderung eines Bohrparameters dar. Es im Sinne der Erfindung bevorzugt, dass der sprunghafte Anstieg der Leistungsaufnahme des Motors mit dem Beginn des Bohrvorgangs zusammenfällt, da der Anstieg der Leistungsaufnahme des Motors insbesondere dadurch hervorgerufen wird, dass die Bohrkrone in Kontakt mit dem von dem Bohrgerät zu bearbeitenden Untergrund gelangt.

Es ist im Sinne der Erfindung bevorzugt, dass ermittelte und/oder ausgewertete Messdaten zum Auslösen von Funktionen des Bohrsystems oder von Komponenten des Bohrsystems verwendbar sind. Mit anderen Worten ist es im Sinne der Erfindung bevorzugt, dass mindestens eine weitere Funktion des Gerätesystems auf Grundlage der Tiefe der Bohrung ausgelöst werden kann. Diese weiteren Funktionen können insbesondere darin bestehen, dass ein akustisches und/oder optisches Signal ausgegeben wird oder darin, dass ein Bohrantrieb abgeschaltet wird. Beispielsweise kann das vorgeschlagenen Gerätesystem ein akustisches Signal abgeben, wenn eine bestimmte, zum Beispiel zuvor eingegebene Bohrtiefe erreicht ist. Wenn beispielsweise die Dicke einer zu durchbohrenden Wand bekannt ist und ein sanfter Durchbruch auf der Rückseite der Wand gewünscht ist, kann der Bediener des Bohrsystems vor dem Durchbruch durch die Wand mit einem akustischen Signal über den bevorstehenden Durchbruch gewarnt werden, so dass der Bediener beispielsweise die Vorschubkraft manuell verringern kann, um einen saften Wanddurchbruch zu erreichen. Es kann im Sinne der Erfindung auch bevorzugt sein, dass der Antrieb des Bohrgeräts abgeschaltet wird, wenn eine bestimmte Bohrlochtiefe erreicht wird. Ferner ist es im Kontext der vorliegenden Erfindung vorstellbar, dass der Antrieb des Bohrgeräts in Abhängigkeit von der Tiefe der Bohrung geregelt und/oder gesteuert wird. Das bedeutet beispielsweise, dass das Gerätesystem dazu eingerichtet ist, die Bohrgeschwindigkeit bzw. eine Umdrehungsgeschwindigkeit der Bohrkrone in Abhängigkeit von der Tiefe der Bohrung einzustellen.

Es ist im Sinne der Erfindung bevorzugt, dass die Steuereinrichtung des vorgeschlagenen Gerätesystems Bestandteil des Bohrgeräts oder der Vorschubeinrichtung ist. Mit anderen Worten kann die Steuereinrichtung in dem Bohrgerät und/oder in der Vorschubeinrichtung integriert vorliegen. Es kann im Sinne der Erfindung auch bevorzugt sein, dass die Steuereinrichtung eine separate Einrichtung innerhalb des Gerätesystems bildet. Vorzugsweise umfasst die Steuereinrichtung einen Prozessor, der bevorzugt dazu eingerichtet ist, die erfassten Messwerte, beispielsweise Drehwinkel und/oder die erfasste Leistung bzw. Leistungsaufnahme des Motors, auszuwerten und informationstechnologisch weiterzuverarbeiten.

Es ist im Sinne der Erfindung bevorzugt, dass der Sensor als Beschleunigungssensor oder als Gyrosensor ausgebildet ist. Denkbar ist auch die Verwendung eines Hall-Sensors. Es ist im Sinne der Erfindung ganz besonders bevorzugt, dass der mindestens eine verwendete Sensor dazu eingerichtet ist zu erkennen, in welche Richtung das Handrad oder der Hebel gedreht wird. Ferner ist es im Kontext der vorliegenden Erfindung bevorzugt, dass die Sensoren dazu eingerichtet sind, unabhängig von der Lage des Bohrgeräts die Anzahl der Umdrehungen der manuellen Vorschubeinrichtung zu erfassen. Beispielsweise kann das Bohrgerät am Boden, im Bereich einer Raumdecke, gerade oder schräg gelagert betrieben werden. Es war für die Fachwelt überraschend, dass mit der Erfindung ein Gerätesystem zur Ermittlung der Bohrtiefe bereitgestellt werden kann, das insbesondere unabhängig von der Lage des Bohrgeräts die Umdrehungen der manuellen Vorschubeinrichtung erkennen kann.

In einer bevorzugten Ausführungsform der Erfindung erfolgt eine Übermittlung der von dem Sensor an die Steuereinrichtung kabelgebunden oder kabellos. Vorzugsweise ist der Motor des Bohrgeräts als Elektromotor ausgebildet.

Es ist im Sinne der Erfindung bevorzugt, dass das Bohrsystem eine Anzeigevorrichtung zur Anzeige von ermittelten und/oder ausgewerteten Daten umfasst. Vorzugsweise kann die Anzeigevorrichtung als Display, Bildschirm, Monitor, Touch-Bildschirm oder als Screen ausgebildet sein, ohne darauf beschränkt zu sein. Es ist im Sinne der Erfindung ganz besonders bevorzugt, dass die Anzeigevorrichtung dazu eingerichtet ist, die ermittelte Tiefe des Bohrlochs anzuzeigen. Dies kann beispielsweise grafisch oder mittels nummerischer Werte erfolgen. Beispielsweise kann die Anzeigevorrichtung ein Dashboard anzeigen, auf dem verschiedene Informationen für den Bediener des Bohrgeräts angezeigt werden können.

Es ist im Sinne der Erfindung bevorzugt, dass eine gebohrte Tiefe, die mit dem vorgeschlagenen System ermittelt wird, an einen Empfänger zur weiteren Verarbeitung übermittelt werden kann. Dabei kann es sich beispielsweise um ein Backoffice eines Bauunternehmens handeln, in dem die Daten, beispielsweise zu Abrechnungszwecken, ausgewertet und informationstechnologisch weiterverarbeitet werden.

Es ist im Sinne der Erfindung bevorzugt, dass die Anzeigevorrichtung Bestandteil des Bohrgeräts oder der Vorschubeinrichtung ist. Das bedeutet, dass die Anzeigevorrichtung an dem Bohrgerät angeordnet vorliegen kann, d.h. eine Komponente des Bohrgeräts darstellt. Alternativ kann die Anzeigevorrichtung an der Vorschubeinrichtung angeordnet vorliegen, d.h. eine Komponente der Vorschubvorrichtung darstellen. Es kann im Sinne der Erfindung darüber hinaus bevorzugt sein, dass eine Anzeige von Daten auch über eine externe Vorrichtung erfolgen kann. Bei der externen Vorrichtung kann es sich beispielsweise um eine mobile Kommunikationsvorrichtung, wie ein Smartphone oder einen Laptop, handeln.

In einem zweiten Aspekt betrifft die Erfindung ein Verfahren zur Ermittlung einer Tiefe einer Bohrung, wobei die Bohrung mit einem vorgeschlagenen Gerätesystem erzeugt wird. Das vorgeschlagenen Verfahren ist durch folgende Verfahrensschritte gekennzeichnet:
a) Erfassung von mindestens einem Bohrparameter des Gerätesystems,
b) Ableitung eines Startpunkts und/oder Endpunkts der Bohrung aus dem unter a) erfassten Bohrparameter,
c) Erfassung von Messwerten mittels eines Sensors,
d) Übermittlung der Messwerte an eine Steuereinrichtung,
e) Bestimmung einer Anzahl von Umdrehungen einer manuellen Vorschubeinrichtung aus den unter c) erfassten Messwerten,
f) Bestimmung der Tiefe einer Bohrung aus der Anzahl von Umdrehungen der manuellen Vorschubeinrichtung und eines Übersetzungsverhältnisses.

Die für das Gerätesystem beschriebenen Definitionen, technischen Wirkungen und Vorteile gelten für das vorgeschlagene Verfahren analog. Bei dem Bohrparameter des Gerätesystems kann es sich vorzugsweise um die Leistungsaufnahme des Motors des Bohrgeräts handeln. Mit anderen Worten kann das vorgeschlagene Verfahren die Schritte a) Erfassung einer Leistungsaufnahme eines Motors des Bohrgeräts und b) Ableitung eines Startpunkts der Bohrung aus den unter a) erfassten Leistungsaufnahmedaten umfassen. Es ist im Sinne der Erfindung bevorzugt, dass der Bohrparameter bzw. die Leistungsaufnahme des Motors mit einer entsprechenden Sensorik erfasst und an die Steuereinrichtung des Gerätesystems weitergeleitet werden kann. Diese Datenweiterleitung kann vorzugsweise kabelgebunden oder kabellos erfolgen. Die Daten können in der Steuereinrichtung informationstechnologisch weiterverarbeitet werden, was beispielsweise durch eine Analyse, Filterung oder dergleichen erfolgen kann. Insbesondere werden die erfassten Werte für den Bohrparameter oder die Leistungsaufnahme des Motors dazu verwendet, einen Startpunkt der Bohrung bzw. einen Beginn des Bohrvorgangs abzuleiten bzw. daraus zu bestimmen. Diese Bestimmung kann vorzugsweise in bzw. von der Steuereinrichtung des Gerätesystems durchgeführt werden. Ferner werden im Kontext der Erfindung Messwerte, wie Drehwinkel und/oder Positionswerte, erfasst. Dazu kann die Vorschubvorrichtung bzw. die mobile Vorschubvorrichtung eine entsprechende Sensorik umfassen, die vorzugsweise mindestens einen Gyro- oder Beschleunigungssensor oder ein Magnetometer umfassen kann.

Es kann im Sinne der Erfindung ferner bevorzugt sein, zusätzlich denjenigen Bereich zu erfassen, der zwischen dem Startpunkt und dem Endpunkt der Bohrung liegt. Dabei kann es sich um eine Zeitspanne und/oder um einen räumlichen Abstand zwischen Start- und Endpunkt der Bohrung handeln. Dieser Bereich wird insbesondere durch die sich jeweils entgegengesetzt abrupt ändernden Bohrparameter, wie zum Beispiel durch die Leistung des Bohrgerät-Motors, gekennzeichnet. Beispielweise kann der Startpunkt der Bohrung von einem starken Leistungsanstieg und der Endpunkt der Bohrung von einem starken Leistungsabfall gekennzeichnet sein. Dadurch wird die Erfassung der Bohrtiefe weiter erleichtert bzw. sie kann genauer gestaltet werden.

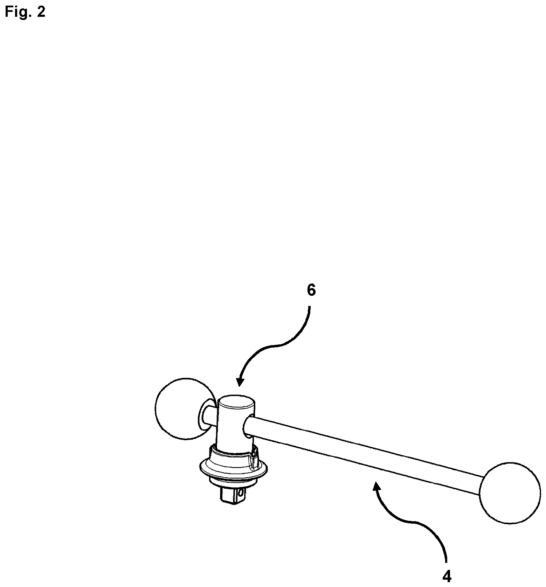

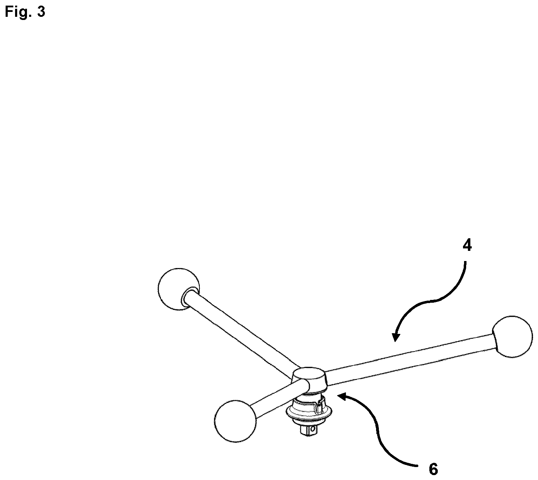

Vorzugsweise kann ein Gyrosensor an einem drehbaren Teil, wie der Achse des Handrads, angeordnet vorliegen, während ein Hall-Sensor vorzugsweise so angeordnet ist, dass ein Erfassungsbereich des Sensors auf ein drehbares Teil oder von einem drehbaren auf ein stehendes Teil gerichtet ist. Mögliche Anordnungen des Sensors sind in den Fig. 2 und 3 dargestellt.

Es ist im Sinne der Erfindung bevorzugt, dass der mindestens eine Sensor der (mobilen) Vorschubeinrichtung dazu eingerichtet ist, einen Messwert, wie einen Drehwinkel, des Handrads bzw. von Bestandteilen des Handrades zu erfassen, wobei aus diesem Messwert bzw. Drehwinkel eine Anzahl von Umdrehungen des Handrads ermittelt werden kann.

Dazu werden die von dem Sensor erfassten Drehwinkel als Messwerte an die Steuereinrichtung weitergeleitet, wobei diese Datenweiterleitung vorzugsweise kabelgebunden oder kabellos erfolgen kann. Es ist im Sinne der Erfindung bevorzugt, dass die Bestimmung einer Anzahl von Umdrehungen des Handrades in der bzw. durch die Steuereinrichtung des Gerätesystems durchgeführt wird. Erfindungsgemäß ist dann vorgesehen, dass die Tiefe der Bohrung bzw. des Bohrlochs aus der Anzahl von Umdrehungen des Handrads und eines Übersetzungsverhältnisses bestimmt wird.

Es ist im Sinne der Erfindung bevorzugt, dass die Tiefe der Bohrung auf einer Anzeigenvorrichtung des Gerätesystems angezeigt wird. Beispielsweise kann die Tiefe des Bohrlochs auf einem Display des Bohrgeräts angezeigt werden.

Bei dem Bohrgerät kann es sich insbesondere um eine Diamantwerkzeugmaschine handeln, insbesondere ein Kernbohrgerät, das dazu eingerichtet ist, zylinderförmige Bohrkerne zu erzeugen und aus einem zu bearbeitenden Untergrund herauszuschneiden. Das Werkzeug einer solchen Werkzeugmaschine, mit dem der Bohrkern erzeugt wird, wird im Sinne der Erfindung bevorzugt als Bohrkrone bezeichnet. Mit anderen Worten ist es im Sinne der Erfindung bevorzugt, dass das Bohrgerät eine Bohrkrone als Werkzeug umfasst. Insofern ermöglicht die Erfindung insbesondere eine Bohrtiefenmessung bei ständergeführten Kernbohrgeräten

Weitere Vorteile der Erfindung ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung einer bevorzugten Ausführungsform der Erfindung
- Fig. 2: Darstellung einer als Hebel ausgebildeten manuellen Vorschubeinrichtung
- Fig. 3: Darstellung einer als Handrad ausgebildeten manuellen Vorschubeinrichtung

### Ausführungsbeispiel und Figurenbeschreibung

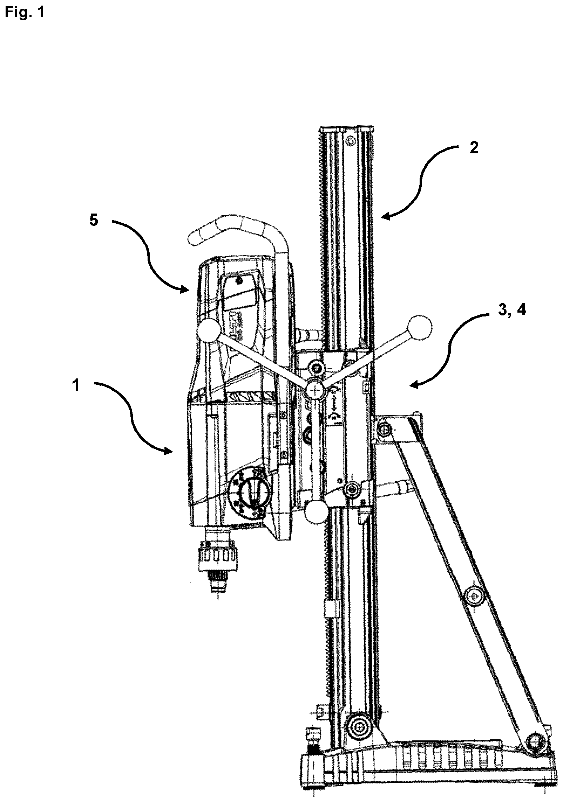

Fig. 1 zeigt eine beispielhafte Ausgestaltung der Erfindung. Insbesondere zeigt Fig. 1 ein Gerätesystem mit einem Bohrgerät (1), einem Geräteständer (2) und einer Vorschubeinrichtung (3). Die Vorschubeinrichtung (3) umfasst eine manuelle Vorschubeinrichtung (4), die als Handrad oder als Hebel ausgebildet sein kann. In dem in Fig. 1 abgebildeten Ausführungsbeispiel der Erfindung ist eine als Handrad ausgebildete manuelle Vorschubeinrichtung (4) dargestellt. Das Bohrgerät (1) kann an dem Bohrständer (2) befestigt vorliegen, wobei zwischen dem Bohrgerät (1) und dem Geräteständer (2) die Vorschubvorrichtung (3, 4) angeordnet vorliegen kann. Unten links in der Zeichnung ist die Bohrkrone (ohne Bezugszeichen) abgebildet, mit der beispielsweise ein Bohrkern aus einem Untergrund, einer Wand oder einer Decke geschnitten werden kann. Fig. 1 zeigt ferner eine mögliche Anordnung der Steuereinrichtung (5) am Bohrgerät (1). Vorzugsweise kann die Steuereinrichtung (5) Bestandteil des Bohrgeräts (1) oder der Vorschubeinrichtung (3) sein.
Fig. 2 zeigte eine bevorzugte Ausführungsform der Erfindung, bei der die manuelle Vorschubeinrichtung (4) als Hebel ausgebildet ist. Fig. 3 zeigte eine bevorzugte Ausführungsform der Erfindung, bei der die manuelle Vorschubeinrichtung (4) als Handrad ausgebildet ist. Jeweils in einem Drehpunkt bzw. in einer Drehachse des Hebels bzw. des Handrads liegt vorzugsweise der mindestens eine Sensor (6) vor, der im Kontext der Erfindung zur Ermittlung von Messwerten, wie Drehwinkeln, verwendet wird.

### Bezugszeichenliste

- 1: Bohrgerät
- 2: Geräteständer
- 3: Vorschubvorrichtung
- 4: manuelle Vorschubeinrichtung
- 5: Steuereinrichtung
- 6: Sensor

## Patentansprüche

1. Gerätesystem umfassend einen Geräteständer (2), ein am Geräteständer verschiebbar angeordnetes Bohrgerät (1) zur Durchführung einer Bohrung und eine Vorschubvorrichtung (3) zum Verschieben des Bohrgerätes entlang des Geräteständers, wobei die Vorschubeinrichtung eine manuelle Vorschubeinrichtung (4) umfasst, das Gerätesystem eine Steuereinrichtung (5) zur Auswertung von Messwerten umfasst,
**dadurch gekennzeichnet, dass**
die Vorschubeinrichtung (3) oder die manuelle Vorschubeinrichtung (4) mindestens einen Sensor (6) zur Ermittlung von Messwerten umfasst, wobei die Messwerte zur Auswertung verwendbar und an die Steuereinrichtung (5) übermittelbar sind, wobei ein Startpunkt und/oder Endpunkt der Bohrung von der Steuereinrichtung (5) durch eine sprunghafte Veränderung von weiteren Bohrparametern erkannt wird.

2. Gerätesystem nach Anspruch 1
**dadurch gekennzeichnet, dass**
eine Tiefe der Bohrung unter Verwendung eines Übersetzungsverhältnisses und einer Anzahl von Umdrehungen der manuellen Vorschubeinrichtung (4) bestimmbar ist, wobei die Anzahl von Umdrehungen der manuellen Vorschubeinrichtung auf Grundlage der Messwerte ermittelbar ist.

3. Gerätesystem nach Anspruch 1 oder 2
**dadurch gekennzeichnet, dass**
ermittelte und/oder ausgewertete Messdaten zum Auslösen von Funktionen des Gerätesystems oder von Komponenten des Bohrsystems verwendbar sind.

4. Gerätesystem nach einem der vorhergehenden Ansprüche
**dadurch gekennzeichnet, dass**
die manuelle Vorschubeinrichtung (4) als Handrad oder als Hebel ausgebildet ist.

5. Gerätesystem nach einem der vorhergehenden Ansprüche
**dadurch gekennzeichnet, dass**
die Steuereinrichtung (5) Bestandteil des Bohrgeräts (1) oder der Vorschubeinrichtung (3) ist.

6. Gerätesystem nach einem der vorhergehenden Ansprüche
**dadurch gekennzeichnet, dass**
der Sensor (6) als Beschleunigungssensor, Gyrosensor und/oder Hall-Sensor ausgebildet ist.

7. Gerätesystem nach einem der vorhergehenden Ansprüche
**dadurch gekennzeichnet, dass**
eine Übermittlung der Messwerte von dem Sensor (6) an die Steuereinrichtung (5) kabelgebunden oder kabellos erfolgt.

8. Gerätesystem nach einem der vorhergehenden Ansprüche
**dadurch gekennzeichnet, dass**
ein Motor des Bohrgeräts (1) als Elektromotor ausgebildet ist.

9. Gerätesystem nach einem der vorhergehenden Ansprüche
**dadurch gekennzeichnet, dass**
das Gerätesystem eine Anzeigevorrichtung zur Anzeige von ermittelten und/oder ausgewerteten Daten umfasst.

10. Gerätesystem nach einem der vorhergehenden Ansprüche
**dadurch gekennzeichnet, dass**
die Anzeigevorrichtung Bestandteil des Bohrgeräts (1) oder der Vorschubeinrichtung (3) ist.

11. Verfahren zur Ermittlung einer Tiefe einer Bohrung, wobei die Bohrung mit einem Gerätesystem nach einem der vorhergehenden Ansprüche erzeugt wird,
**gekennzeichnet durch die folgenden Verfahrensschritte:**
a) Erfassung von mindestens einem Bohrparameter des Gerätesystems,
b) Ableitung eines Startpunkts und/oder Endpunkts der Bohrung aus dem unter a) erfassten Bohrparameter,
c) Erfassung von Messwerten mittels eines Sensors (6),
d) Übermittlung der Messwerte an eine Steuereinrichtung (5),
e) Bestimmung einer Anzahl von Umdrehungen einer manuellen Vorschubeinrichtung (4) aus den unter c) erfassten Messwerten,
f) Bestimmung der Tiefe einer Bohrung aus der Anzahl von Umdrehungen der manuellen Vorschubeinrichtung (4) und eines Übersetzungsverhältnisses.

12. Verfahren nach Anspruch 11
**dadurch gekennzeichnet, dass**
die Tiefe der Bohrung auf einem Display des Gerätesystems angezeigt wird.

13. Verfahren nach Anspruch 11 oder 12
**dadurch gekennzeichnet, dass**
eine mindestens weitere Funktion des Gerätesystems auf Grundlage der Tiefe der Bohrung ausgelöst wird.
